# EUROPÄISCHE PATENTANMELDUNG

(11) **EP 4 201 725 A1**
(43) Veröffentlichungstag der Anmeldung: **28.06.2023**
(21) Anmeldenummer: 22204652.6
(22) Anmeldetag: 31.10.2022
(51) Int. Cl.: B60K 15/07, E02F 9/08

(54) **ARBEITSMASCHINE**

(30) Priorität: 19.11.2021 DE 102021130374
(71) Anmelder: Liebherr-Werk Bischofshofen GmbH, 5500 Bischofshofen (AT)
(72) Erfinder: Knapp, Herr Hans, 5500 Bischofshofen (AT); Heugenhauser, Gerald, 5622 Goldegg (AT); Dengg, Reinhard, 5580 Tamsweg (AT); Sagorz, David, 5633 Bad Hofgastein (AT)
(74) Vertreter: Herrmann, Uwe

(57) **Zusammenfassung**

Die vorliegende Erfindung betrifft eine Arbeitsmaschine, insbesondere einen Radlader, mit einer Kabine für den Führer der Arbeitsmaschine sowie mit einem hinter der Kabine angeordneten Maschinenraum, wobei die Arbeitsmaschine über einen Antrieb verfügt, der mit Wasserstoff betreibbar ist und wobei ein oder mehrere Tanks zur Aufnahme von Wasserstoff vorhanden sind, wobei der oder die Tanks hinter der Kabine und oberhalb des Maschinenraums in einem Wasserstoff-Kraftstoffsystem angeordnet sind.

## Beschreibung

Die vorliegende Erfindung betrifft eine Arbeitsmaschine, insbesondere einen Radlader, mit einer Kabine für den Führer der Arbeitsmaschine sowie mit einem hinter der Kabine angeordneten Maschinenraum.

Aus dem Stand der Technik ist es bekannt, Radlader mit einer Kabine für den Führer der Arbeitsmaschine und mit einem Maschinenraum auszuführen, wobei sich in dem Maschinenraum ein Dieselmotor befindet, der zum Vortrieb der Arbeitsmaschine dient.

Im Zuge der Decarbonisierung stellt sich auch im Bereich von Arbeitsmaschinen die Frage nach alternativen Energieträgern, wie beispielsweise Wasserstoff. Dessen Einsatz hat sich weder bei Personen- noch bei Nutzfahrzeugen durchgesetzt. Die wenigen bekannten Ausführungen sehen eine Anordnung der Wasserstoff-Kraftstoffsystems im Zentrum des Fahrzeuges vor, um einen bestmöglichen Schutz der Tanks vor äußeren Einwirkungen zu bieten.

Der vorliegenden Erfindung liegt die Aufgabe zugrunde, eine Arbeitsmaschine der eingangs genannten Art dahingehend weiterzubilden, dass diese für den Einsatz alternativer Energieträger, insbesondere von Wasserstoff, besonders geeignet ist.

Diese Aufgabe wird durch eine Arbeitsmaschine mit den Merkmalen des Anspruchs 1 gelöst. Danach ist vorgesehen, dass die Arbeitsmaschine über einen Antrieb verfügt, der mit Wasserstoff betreibbar ist und dass ein oder mehrere Tanks zur Aufnahme von Wasserstoff vorhanden ist, wobei der oder die Tanks in einem Wasserstoff-Kraftstoffsystem hinter der Kabine und oberhalb des Maschinenraums angeordnet sind. Dieser Antrieb ist oder umfasst vorzugweise einen Antrieb, der zum Vortrieb der Arbeitsmaschine dient, d.h. einen Fahrantrieb.

Diese Anordnung des oder der Wasserstofftanks im Wasserstoff-Kraftstoffsystem erlaubt die bestmögliche Ausnutzung des Bauraums unter vollständiger oder weitgehender Beibehaltung der Fahrzeugaußenabmessungen eines Radladers oder einer sonstigen Arbeitsmaschine mit Dieselmotor.

Aufgrund der Anordnung des Wasserstoff-Kraftstoffsystems oberhalb des Maschinenraums wird eine räumliche Trennung des Wasserstoff-Kraftstoffsystems von den heißen und zündfähigen Umgebungsbedingungen innerhalb des Maschinenraums erreicht. Somit besteht größtmögliche Sicherheit im Falle einer Tankleckage, da sich das Wasserstoff-Kraftstoffsystems oberhalb des Maschinenraums befindet.

Ein weiterer Vorteil dieser Anordnung besteht in der guten Zugänglichkeit des Wasserstoff-Kraftstoffsystems sowie in der Möglichkeit, dieses hinreichend vor Beschädigungen zu schützen.

An sich ist die Anordnung des Wasserstoff-Kraftstoffsystems hinter der Kabine unter Umständen insofern nachteilig, als dass das Sichtfeld des Maschinenführers nach hinten eingeschränkt werden kann. Dieses Problem kann einerseits durch die Verwendung von Kameras und/oder Sensoren zur Erfassung des vom Maschinenführer nicht einsehbaren Bereichs behoben werden.

Besonders vorteilhaft ist es jedoch, wenn der Maschinenraum bzw. dessen Abdeckung zur Verbesserung der Sicht des Maschinenführers tailliert ausgebildet ist.

Dabei befindet sich die Taillierung vorzugsweise an einer oder beiden Seiten des Maschinenraums bzw. von dessen Abdeckung. Dies bringt den Vorteil mit sich, dass dem nach hinten blickenden Maschinenführer eine hinreichende Sicht auf die Ballastkante ermöglicht wird, so dass trotz des sichtbehindernden Wasserstoff-Kraftstoffsystems eine sichere Manövrierbarkeit gegeben ist.

In diesem Fall kann auf zusätzliche Kameras und/oder Sensoren zur Erfassung des Bereichs hinter der Arbeitsmaschine verzichtet werden, was entsprechende Kostenvorteile mit sich bringt.

Die Art der Speicherung von Wasserstoff ist beliebig. Der Tank kann beispielsweise geeignet sein, Wasserstoff in flüssiger und/oder gasförmiger Form und/oder in gebundener Form zu speichern.

Das Wasserstoff-Kraftstoffsystem ist bereits durch seine erhöhte Position auf dem Maschinenraum bzw. auf dessen Abdeckung geschützt. Besonders vorteilhaft ist es, wenn zudem eine Verkleidung vorhanden ist, die das Wasserstoff-Kraftstoffsystem vollständig oder teilweise umgibt.

Bevorzugt ist es, wenn sich oberhalb des Wasserstoff-Kraftstoffsystems kein anderer Bestandteil der Arbeitsmaschine befindet. Dies hat den erheblichen Vorteil, dass Wasserstoff im Falle einer Leckage ungehindert nach oben entweichen kann und nicht mit einer Komponente der Arbeitsmaschine in Kontakt kommt. Die Wahrscheinlichkeit für die Entzündung von entweichendem Wasserstoff durch eine ggf. heiße Maschinenkomponente ist dadurch minimiert.

Die Umsetzung der hiermit beschriebenen Tankanordnung ermöglicht es, eine verhältnismäßig große Menge an Wasserstoff am Gerät mitzuführen und gerade mit dieser Tankanordnung können die relevanten Richtlinien und Normen hinsichtlich Tankeinbau und Sicherheit des Wasserstoffsystems eingehalten werden. Erst damit kann eine möglichst lange Einsatzzeit der Arbeitsmaschine auch ohne Zwischentanken garantiert werden.

Der Begriff eines "Antriebes, der mit Wasserstoff betreibbar ist" ist nicht einschränkend dahingehend zu verstehen, dass ein Wasserstoffverbrennungsmotor gemeint ist, wenngleich auch dieser von der Erfindung umfasst ist. Denkbar ist es beispielsweise, dass die Arbeitsmaschine über eine Brennstoffzelle zur Erzeugung von elektrischer Energie mittels Wasserstoff und/oder über einen Wasserstoffverbrennungsmotor verfügt.

Vorzugsweise wird der Vortrieb der Arbeitsmaschine durch Wasserstoff ermöglicht. Denkbar ist ein Antrieb umfassend ein Brennstoffzellensystem und einen elektrifizierten Antriebsstrang, vorzugsweise als Ersatz für den in bekannten Arbeitsmaschinen verwendeten Dieselmotor.

Denkbar ist es, dass die Arbeitsmaschine keinen Verbrennungsmotor für Dieselkraftstoff oder Benzin als Fahrantrieb der Arbeitsmaschine aufweist.

Von der Erfindung ist auch der Fall umfasst, dass die Arbeitsmaschine einen Verbrennungsmotor für Dieselkraftstoff oder Benzin als Fahrantrieb der Arbeitsmaschine aufweist und zusätzlich einen mit Wasserstoff betreibbaren Antrieb als Fahrantrieb der Arbeitsmaschine aufweist (Dual Fuel System).

Zum Zwecke der Wartung und/oder des Austausches kann vorgesehen sein, dass die Bestandteile des Wasserstoff-Kraftstoffsystems nicht fest mit der Arbeitsmaschine in Verbindung stehen, sondern austauschbar sind.

Vorzugsweise ist das Wasserstoff-Kraftstoffsystem bzw. ggf. dessen Verkleidung so dimensioniert, dass dieses nicht seitlich und/oder nach hinten und/oder nach vorne über den Maschinenraum übersteht.

Die Anzahl, Anordnung und Form der Tanks ist beliebig. Denkbar ist die Verwendung länglicher Tanks, die längs oder quer zur Fahrtrichtung der Arbeitsmaschine angeordnet sind.

Das Wasserstoff-Kraftstoffsystem kann eine oder mehrere der Komponenten:
- Tank zur Aufnahme von Wasserstoff bzw. enthaltend Wasserstoff,
- Ventil,
- Verrohrung
umfassen oder aus diesen bestehen. Die genannte Verrohrung dient beispielsweise zur Verbindung des oder Tanks mit einem oder mehreren Ventilen und/oder zur Anbindung einer zu dem Antrieb führenden Versorgungsleitung und/oder zur Verbindung von Tanks untereinander etc.

Die vorliegende Erfindung umfasst sowohl eine Arbeitsmaschine, deren Tanks teilweise oder vollständig mit Wasserstoff gefüllt sind, als auch eine Arbeitsmaschine mit Tanks, die nicht mit Wasserstoff gefüllt sind.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weitere Einzelheiten und Vorteile der Erfindung werden anhand eines in der Zeichnung dargestellten Ausführungsbeispiels näher erläutert.

Es zeigen:
- Figur 1:: eine schematische Seitenansicht eines Radladers von rechts,
- Figur 2:: eine schematische Seitenansicht eines Radladers von links,
- Figur 3:: eine schematische Draufsicht auf den Radlader,
- Figur 4:: eine schematische Draufsicht auf den Radlader in einer Schnittebene unter dem Wasserstoff-Kraftstoffsystem mit Sichtbereich des Maschinenführers nach hinten und
- Figur 5:: eine schematische Draufsicht auf den Radlader mit Sichtbereich des Maschinenführers nach hinten.

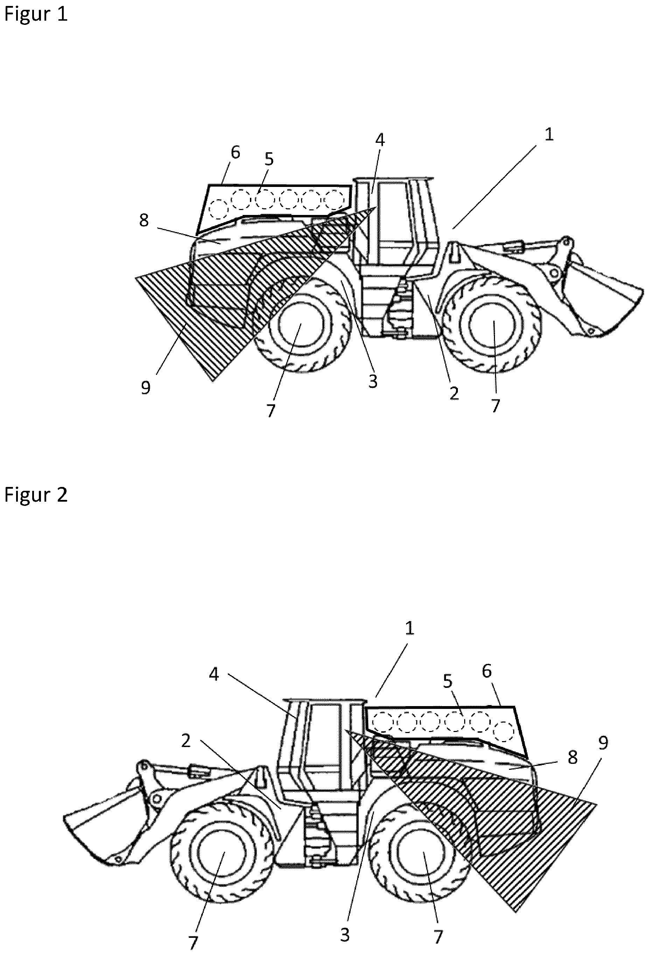

Die Figuren 1 und 2 zeigen Seitenansichten einer Ausführungsform des Radladers 1 gemäß der Erfindung.

Der Radlader 1 weist einen Vorderwagen 2 und einen Hinterwagen 3 auf, die durch ein Knickgelenk miteinander verbunden sind.

Mit dem Bezugszeichen 4 ist die Kabine gekennzeichnet.

Im Hinterwagen befindet sich der Maschinenraum 8, der u.a. die Antriebstechnik des Radladers zum Antrieb der Antriebsachsen 7 des Radladers 1 aufweist.

Wie dies aus den Figuren 1 und 2 hervorgeht, befindet sich hinter der Kabine 4 und oberhalb des Maschinenraums 8 das aus mehreren einzelnen Tanks 5 bestehende Wasserstoff-Kraftstoffsystem. Dieses ist von einer schützenden Verkleidung 6 allseitig umgeben.

Die Verkleidung bzw. das Wasserstoff-Kraftstoffsystem erstreckt sich im Wesentlichen bis zum Kabinendach und/oder über die gesamte Breite der Kabine.

Mit 9 ist das Sichtfeld des Maschinenführers nach hinten gekennzeichnet.

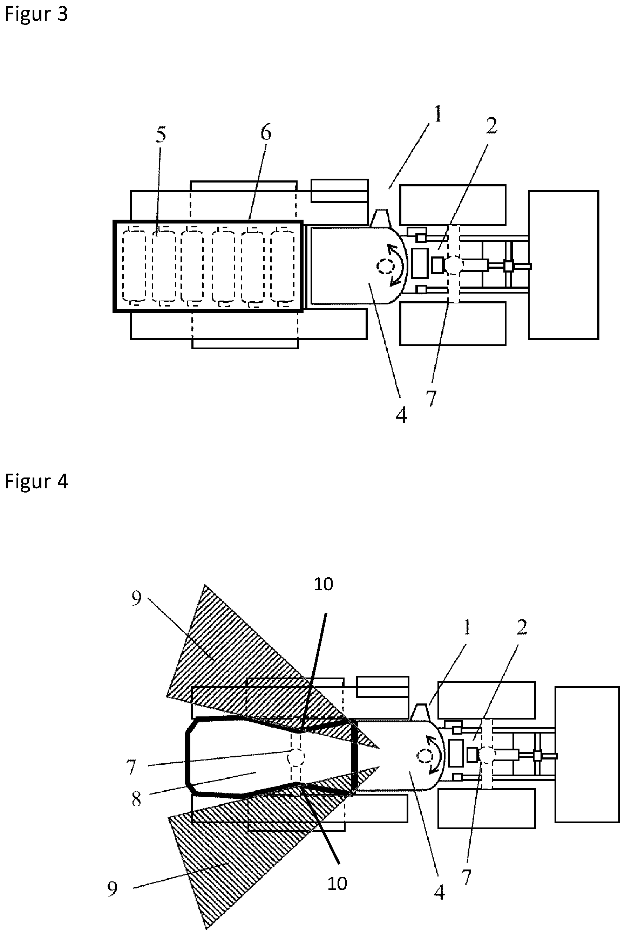

Figur 3 zeigt eine Draufsicht auf den Radlader gemäß Figur 1 und verdeutlicht die exemplarische Ausführung, bei der mehrere Tanks 5 quer zur Fahrtrichtung hintereinander angeordnet sind.

Der Doppelpfeil um das gestrichelt dargestellte Knickgelenk verdeutlicht die Bewegbarkeit von Vorder- und Hinterwagen relativ zueinander.

Aus Figur 4 geht eine Draufsicht ohne Wasserstoff-Kraftstoffsystem bzw. in einer Schnittebene unter dem Wasserstoff-Kraftstoffsystem hervor.

Wie dies aus Figur 4 ersichtlich ist, weist die Verkleidung des Maschinenraums 8 an beiden Seiten einen in der Draufsicht dreieckigen Einschnitt 10 auf, d.h. eine Taillierung, die es dem Maschinenführer erlaubt, trotz des Wasserstoff-Kraftstoffsystems eine hinreichende Sicht nach hinten zu haben. Das Sichtfeld des Maschinenführers nach hinten ist durch das Bezugszeichen 9 gekennzeichnet.

Vorzugsweise erstreckt sich dieser Einschnitt 10 auf beiden Seiten des Maschinenraums bzw. von dessen Verkleidung.

Vorzugsweise erstreckt sich der Einschnitt über die gesamte Höhe des Maschinenraums bzw. von dessen Verkleidung.

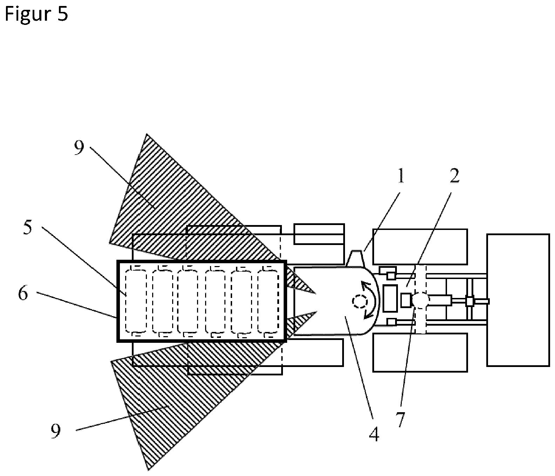

Figur 5 zeigt die Anordnung gemäß Figur 4, allerdings mit Tanks 5. Aus Figur 5 ist ersichtlich, dass das Sichtfeld 9 nach hinten gemäß Figur 4 aufgrund der Taillierung durch das Wasserstoff-Kraftstoffsystem bzw. deren Verkleidung nicht eingeschränkt wird.

## Patentansprüche

1. Arbeitsmaschine, insbesondere Radlader, mit einer Kabine für den Führer der Arbeitsmaschine sowie mit einem hinter der Kabine angeordneten Maschinenraum, **dadurch gekennzeichnet, dass** die Arbeitsmaschine über einen Antrieb verfügt, der mit Wasserstoff betreibbar ist und dass ein oder mehrere Tanks zur Aufnahme von Wasserstoff vorhanden sind, wobei der oder die Tanks hinter der Kabine und oberhalb des Maschinenraums in einem Wasserstoff-Kraftstoffsystem angeordnet sind.

2. Arbeitsmaschine nach Anspruch 1, **dadurch gekennzeichnet, dass** der Maschinenraum zur Verbesserung der Sicht des Maschinenführers tailliert ausgebildet ist.

3. Arbeitsmaschine nach Anspruch 2, **dadurch gekennzeichnet, dass** die Taillierung an einer oder beiden Seiten des Maschinenraums vorhanden ist.

4. Arbeitsmaschine nach einem der vorhergehenden Ansprüche, **dadurch gekennzeichnet, dass** weniger Kameras und/oder Sensor(en) angeordnet sind, mittels welcher Bilder oder Signale hinter der Arbeitsmaschine an den Maschinenführer übertragbar sind, als bei einer herkömmlichen Arbeitsmaschine mit einer derartigen Bild- und/oder Sensorerfassung, oder dass keine solche Kamera und/oder kein solcher Sensor vorhanden ist.

5. Arbeitsmaschine nach einem der vorhergehenden Ansprüche, **dadurch gekennzeichnet, dass** das Wasserstoff-Kraftstoffsystem geeignet ist, Wasserstoff in flüssiger und/oder gasförmiger Form und/oder in gebundener Form zu speichern.

6. Arbeitsmaschine nach einem der vorhergehenden Ansprüche, **dadurch gekennzeichnet, dass** eine vor mechanischen Einflüssen schützende Struktur vorhanden ist, welche das Wasserstoff-Kraftstoffsystem zumindest teilweise umgibt.

7. Arbeitsmaschine nach einem der vorhergehenden Ansprüche, **dadurch gekennzeichnet, dass** eine Verkleidung vorhanden ist, welche das Wasserstoff-Kraftstoffsystem zumindest teilweise umgibt.

8. Arbeitsmaschine nach einem der vorhergehenden Ansprüche, **dadurch gekennzeichnet, dass** sich oberhalb des oder des Wasserstoff-Kraftstoffsystems kein anderer Bestandteil der Arbeitsmaschine befindet, welcher eine Zündquelle darstellen kann.

9. Arbeitsmaschine nach einem der vorhergehenden Ansprüche, **dadurch gekennzeichnet, dass** die Arbeitsmaschine über eine Brennstoffzelle zur Erzeugung von elektrischer Energie mittels Wasserstoff und/oder über einen Wasserstoffverbrennungsmotor verfügt.

10. Arbeitsmaschine nach einem der vorhergehenden Ansprüche, **dadurch gekennzeichnet, dass** die Arbeitsmaschine keinen Verbrennungsmotor für Dieselkraftstoff oder Benzin zum Antrieb der Arbeitsmaschine aufweist oder dass die Arbeitsmaschine außer dem mit Wasserstoff betreibbaren Antrieb über einen Verbrennungsmotor für Dieselkraftstoff oder Benzin zum Antrieb der Arbeitsmaschine verfügt.

11. Arbeitsmaschine nach einem der vorhergehenden Ansprüche, **dadurch gekennzeichnet, dass** die Bestandteile des Wasserstoff-Kraftstoffsystems nicht fest mit der Arbeitsmaschine in Verbindung stehen, sondern austauschbar sind.

12. Arbeitsmaschine nach einem der vorhergehenden Ansprüche, **dadurch gekennzeichnet, dass** das Wasserstoff-Kraftstoffsystem zumindest teilweise eine Vormontagebaugruppe bildet.

13. Arbeitsmaschine nach einem der vorhergehenden Ansprüche, **dadurch gekennzeichnet, dass** das Wasserstoff-Kraftstoffsystem eine oder mehrere der Komponenten Tank zur Aufnahme von Wasserstoff bzw. enthaltend Wasserstoff, Ventil, Verrohrung umfasst oder aus diesen besteht.
